# EUROPÄISCHE PATENTSCHRIFT

(11) **EP 0 754 616 B1**
(45) Veröffentlichungstag und Bekanntmachung des Hinweises auf die Patenterteilung: **07.04.1999**
(21) Anmeldenummer: 96890123.1
(22) Anmeldetag: 15.07.1996
(51) Int. Cl.: B62L 3/02

(54) **Betätigungsvorrichtung für Seilzüge, insbesondere von Fahrrad- oder Motorradbremsen**
Cable operating device, espescially of bicycle or motor cycle brakes
Dispositif d'actionnement pour cables, notamment des freins de bicyclette ou motocyclette

(30) Priorität: 17.07.1995 AT 1209/95
(43) Veröffentlichungstag der Anmeldung: 22.01.1997
(73) Patentinhaber: Wagner, Rudolf, 4600 Wels (AT)
(72) Erfinder: Wagner, Rudolf, 4600 Wels (AT)
(74) Vertreter: Hübscher, Heiner, Dipl.-Ing.

(56) Entgegenhaltungen:
- EP-A- 0 635 422
- FR-A- 895 963
- FR-A- 908 362

## Beschreibung

Die Erfindung bezieht sich auf eine Betätigungsvorrichtung für Seilzüge, insbesondere Seilzüge von Fahrrad- oder Motorradbremsen, mit einer gegenüber einer Halterung relativbewegbaren Handhabe, welche Halterung einen eine Seilführung bildenden Führungsansatz aufweist und welche Handhabe aus einem um eine zur Seilführungsrichtung querverlaufende Schwenkachse schwenkbar an der Halterung angelenkten, am durch die Seilführung verlegten Zugseil des Seilzuges angreifenden Betätigungshebel besteht, wobei zum Verschwenken des Betätigungshebels ein eigenständiger, einen Handgriff bildender Handhebel an der Halterung um eine zur Schwenkachse des Betätigungshebels parallele Schwenkachse verschwenkbar gelagert ist und Handhebel und Betätigungshebel als Glieder eines Getriebes zusammenwirken.

Bei üblichen Bremsen ist zu Beginn der Bremsbetätigung ein entsprechender Leerweg bis zur Anlage der Bremsbacken an den Bremsflächen zurückzulegen, bevor dann die Bremsbacken bei steigender Bremskraft an die Bremsflächen angedrückt werden, so daß während der Bremsbetätigung vorerst bei wenig Kraft ein großer Weg und dann bei wenig Weg eine große Kraft über die Handhabe aufzubringen sind, welchen Ablaufbedigungen die meisten bekannten Betätigungsvorrichtungen mit ihren einerseits ein Widerlager für das Zugseil, anderseits einen Handgriff bildenden Betätigungshebeln nicht Rechnung tragen und es zu einem vor allem in extremeren Einsatzfällen doch unbefriedigenden Kompromiß kommt. Durch den vorhandenen, beschränkten Schwenkbereich des Handgriffes und die gleichbleibenden Übersetzungsverhältnisse ist ein wesentlicher Teil des Schwenkweges der Überbrückung des Leerweges zugeordnet und das Aufbringen der eigentlichen Bremskraft erfordert dann innerhalb kleiner Wege hohe Betätigungskräfte am Handgriff, so daß ein feinfühliges Bremsen schwierig ist und vor allem auch ein längeres Bremsen rasch zu Ermüdungen führt und damit den Fahrbetrieb gefährdet.

Gemäß der FR 895 963 A wurde auch schon eine Betätigungsvorrichtung für Seilzüge vorgeschlagen, bei der die Seilhülle oder gegebenenfalls auch das Zugseil an einem verschwenkbaren Betätigungshebel angreift. Ein eigener einarmiger Handhebel ist um eine zur Schwenkachse des Betätigungshebels parallele Achse schwenkbar an der Halterung gelagert und wirkt mit einer gekrümmten Druckseite auf ein Druckglied des Betätigungshebels ein, so daß ein Verschwenken des Handhebels über die Druckseite und das Druckglied zu einem Verschwenken des Betätigungshebels und damit zu einem Betätigen des Seilzuges führt. Es kommt hier zwar zu einem kurvengetriebeähnlichen Zusammenwirken von Handhebel und Betätigungshebel mit einer Kraft-Weg-Übersetzung, doch lassen sich wegen des einarmigen Hebels nur geringe Übersetzungsverhältnisse erreichen und außerdem ändern sich die Kraftübersetzungen von anfänglichen großen zu immer kleineren Übersetzungsverhältnissen und dementsprechend die Wegübersetzungen von anfänglichen kleinen zu immer größeren Übersetzungsverhältnissen, was für Bremsbetätigungen gerade gegensinnig zu den gewünschten Bedingungen ist.

Aus der EP 0 635 422 A ist außerdem eine Betätigungseinrichtung bekannt, bei der eine am Zugseil angreifende Betätigungslasche an einem einarmigen Handhebel angelenkt ist und der über ein an der Halterung angeordnetes Führungsglied während der Handhebelbetätigung eine von der üblichen Bewegungsbahn abweichende Bewegung aufgezwungen wird, so daß sich durch diese Abweichung eine Änderung des Kraft-Weg-Übersetzungsverhältnisses erreichen läßt. Allerdings bedarf die Laschenablenkung eines beträchtlichen Kraftaufwandes und auch hier bleiben die möglichen Übersetzungsbereiche recht beschränkt.

Der Erfindung liegt daher die Aufgabe zugrunde, diese Mängel zu beseitigen und eine Betätigungsvorrichtung der eingangs geschilderten Art zu schaffen, die sich bei vergleichsweise aufwandsarmer Konstruktion durch ihre den tatsächlichen Anforderungen einer Seilzugbedienung und den dabei auftretenden Kräften angepaßte Wirkung auszeichnet.

Die Erfindung löst diese Aufgabe dadurch, daß ein zweiarmiger Handhebel vorgesehen ist, dessen dem Betätigungshebel abgewandter Hebelarm den Handgriff und dessen dem Betätigungshebel zugewandter Hebelarm das Getriebeglied bildet. Durch die einfache Maßnahme, den Handgriff als eigenen Handhebel vom Betätigungshebel zu trennen und damit zwei zueinander relativbewegliche Hebelteile zu erreichen, können diese Hebel nun getriebeartig miteinander kombiniert werden und wegen der Zweiarmigkeit des Handhebels ist es möglich, die Bewegungs- und Übersetzungsverhältnisse im gewünschten Sinne zu beeinflussen. Die Übertragungsverhältnisse können den jeweiligen Anforderungen gemäß geändert werden, um vorzugsweise zu Beginn bei geringerer Kraftübersetzung größere Wege zurückzulegen und dann zum eigentlichen Bremsen bei höherer Kraftübersetzung geringere Wegstrecken einzubeziehen. Damit lassen sich die geringere Kräfte erforderlichen Leerwege schnell überwinden und dann das kraftraubende Bremsen langsam und mit einer Art Kraftverstärkung vornehmen. Der zur Verfügung stehende Schwenkbereich des Handgriffs und damit des Handhebels kann daher bestens genutzt und hinsichtlich der Weg-Kraftverhältnisse optimiert werden. Dabei lassen sich Betätigungshebel und Handhebel funktionell und platzsparend einander zuordnen und können ohne Lager- und Bewegungsschwierigkeiten einwandfrei ihre Getriebegliedfunktion ausüben.

Handhebel und Betätigungshebel können nun konstruktiv auf verschiedene Weise Glieder eines Getriebes bilden. So können der eine Hebelarm des Handhebels und der Betätigungshebel in Art eines Kurvengetriebes zusammenwirken, wobei der Hebelarm über einen Mitnehmer kraftschlüssig an einer Kurvenbahn des Betätigungshebels angreift, so daß beim Verschwenken des Handhebels der Mitnehmer der Kurvenbahn entlang gleitet und sich damit die Hebellängen bei der Weg-Kraftübertragung vom Handgriff auf das Zugseil entsprechend ändern. Durch die Form der Kurvenbahn und die radiale Erstreckung bzw. den Schwenkweg des Mitnehmers ergeben sich die gewünschten Änderungen hinsichtlich Zugstrecke und Zugkraft-Übersetzungen. Dabei läßt sich entsprechend der Kurvenbahngestaltung auch das Maß der Übersetzungsänderungen vorbestimmen und beispielsweise durch einen Knick in der Kurvenbahn der Übergang vom Leerweg zum Kraftweg spürbar anzeigen. Da der Betätigungshebel schwierigkeitslos gewechselt werden kann, läßt sich auch die jeweilige Betätigungsvorrichtung mit Betätigungshebeln unterschiedlicher Kurvenbahn bestücken und damit die Betätigungsvorrichtung auf den jeweiligen Einsatzzweck abstimmen.

Eine weitere Möglichkeit einer Getriebewirkung ergibt sich, wenn Handhebel und Betätigungshebel in Art eines Gelenkvierecks zusammenwirken, wobei der eine Hebelarm des Handhebels und der Betätigungshebel über eine Lasche gelenkig miteinander verbunden sind, was zu einer Formschlußverbindung zwischen den Hebeln führt.

In der Zeichnung ist der Erfindungsgegenstand beispielsweise veranschaulicht, und zwar zeigen
Fig. 1 und 2 eine erfindungsgemäße Betätigungsvorrichtung in teilgeschnittener Seitenansicht und Draufsicht sowie die
Fig. 3 ein weiteres Ausführungsbeispiel einer erfindungsgemäßen Betätigungsvorrichtung ebenfalls in teilgeschnittener Seitenansicht.

Eine Betätigungsvorrichtung 1 für einen Seilzug 2 einer nicht weiter dargestellten Fahrradbremse od. dgl. besteht aus einer am Lenker L des Fahrrades montierten Halterung 3 und einer dieser gegenüber relativbeweglichen Handhabe 4, wobei die Halterung 3 einen Führungsansatz 5 mit einer Seilführung 6 für das Zugseil 7 des Seilzuges 2 aufweist. Die Handhabe 4 setzt sich aus einem Betätigungshebel 8 mit einem Widerlager 9 zum Ansatz des Zugseiles 7 und aus einem einen Handgriff 10 bildenden Handhebel 11 zusammen, welche beiden Hebel 8, 11 um parallele, zur Seilführungsrichtung querliegende Schwenkachsen 12, 13 schwenkbar an der Halterung 3 angelenkt sind. Der Handhebel 11 ist als zweiarmiger Hebel vorgesehen, dessen dem Betätigungshebel 8 abgewandter Hebelarm 14 den Handgriff bildet und dessen dem Betätigungshebel 8 zugewandter kürzerer Hebelarm 15 mit dem Betätigungshebel 8 als Glied eines Getriebes zusammenwirkt.

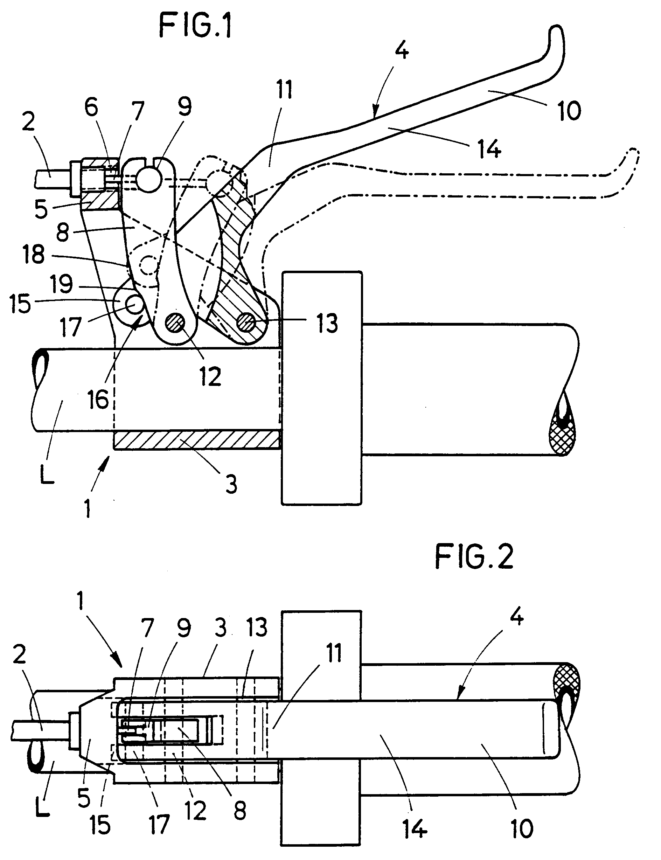

Gemäß dem Ausführungsbeispiel nach Fig. 1 und 2 bilden Handhebel 11 und Betätigungshebel 8 ein Kurvengetriebe 16, wobei der Hebelarm 15 des Handhebels 11 einen Mitnehmer 17 trägt, dem betätigungshebelseitig eine Kurvenbahn 18 zugeordnet ist. Dadurch wird bei Betätigung des Handgriffes 10 der Handhebel 11 von seiner Ausgangsposition in die Bremsposition verschwenkt, wodurch der Mitnehmer 17 der Kurvenbahn 18 entlang radial auswärts gleitet und sich entsprechend dem Kurvenbahnverlauf eine vorgegebene Änderung der Übersetzungsverhältnisse zwischen Handhebelbewegung und Seilzugbewegung erreichen läßt. Die Kurvenbahn 18 kann mit einem Knick 19 versehen sein, bis zu dem ohne großen Kraftaufwand eine große Wegstrecke zurückgelegt wird, um den Leerweg der Bremse zu überwinden, worauf dann eine entsprechende Handkraftverstärkung bei kleiner werdenden Zugstrecken des Seilzuges zustande kommt, was eine kraft- und wegoptimierte Hebelbetätigung erlaubt.

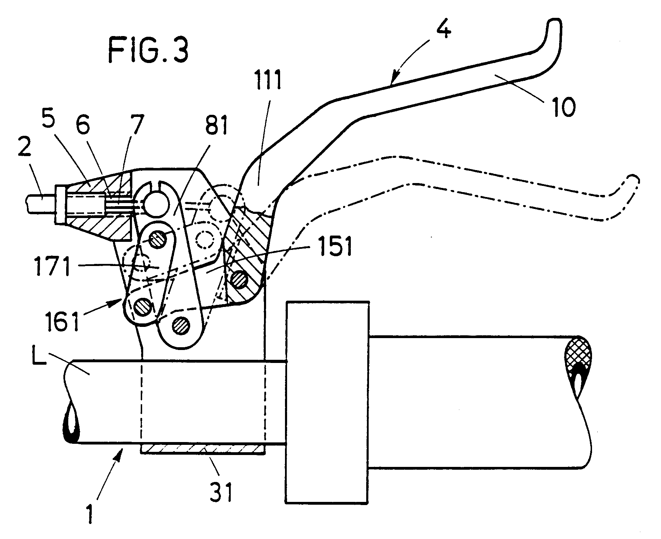

Gemäß dem Ausführungsbeispiel nach Fig. 3 wirken Handhebel 111 und Betätigungshebel 81 in Form eines Gelenkvierecks 161 zusammen, wobei die um parallele Schwenkachsen verschwenkbar an der Halterung 31 gelagerten Betätigungshebel 81 und Handhebel 111 über eine am Betätigungshebel 81 und am Hebelarm 151 des Handhebels 111 angreifende Lasche 171 gelenkig miteinander verbunden sind. Auch hier ändern sich bei Betätigung des Handhebels 111 die Kraft- und Wegeübersetzungen in Abhängigkeit von der jeweiligen Schwenkstellung des Handhebels 111 und des Betätigungshebels 81, so daß sich wiederum eine Optimierung der Übersetzungsverhältnisse erreichen läßt.

## Patentansprüche

1. Betätigungsvorrichrung (1) für Seilzüge (2), insbesondere Seilzüge von Fahrrad- oder Motorradbremsen, mit einer gegenüber einer Halterung (3) relativbewegbaren Handhabe (4), welche Halterung (3) einen eine Seilführung (6) bildenden Führungsansatz (5) aufweist und welche Handhabe (4) aus einem um eine zur Seilführungsrichtung querverlaufende Schwenkachse (12) schwenkbar an der Halterung (3) angelenkten, am durch die Seilführung (6) verlegten Zugseil (7) des Seilzuges (2) angreifenden Betätigungshebel (8) besteht, wobei zum Verschwenken des Betätigungshebels (8) ein eigenständiger, einen Handgriff (10) bildender Handhebel (11) an der Halterung (3) um eine zur Schwenkachse (12) des Betätigungshebels (8) parallele Schwenkachse (13) verschwenkbar gelagert ist und Handhebel (11) und Betätigungshebel (8) als Glieder eines Getriebes (16) zusammenwirken, dadurch gekennzeichnet, daß der Handhebel (11, 111) zweiarmig vorgesehen ist, dessen dem Betätigungshebel (8, 81) abgewandter Hebelarm (14) den Handgriff (10) und dessen dem Betätigungshebei (8, 81) zugewandter Hebelarm (15, 151) das Getriebeglied (17) bildet.

2. Betätigungsvorrichtung nach Anspruch 1, dadurch gekennzeichnet, daß der eine Hebelarm (15) des Handhebels (11) und der Betätigungshebel (8) in Art eines Kurvengetriebes (16) zusammenwirken, wobei der Hebelarm (15) über einen Mitnehmer (17) kraftschlüssig an einer Kurvenbahn (18) des Betätigungshebels (8) angreift.

3. Betätigungsvorrichtung nach Anspruch 1, dadurch gekennzeichnet, daß Handhebel (111) und Betätigungshebel (81) in Art eines Gelenkvierecks (161) zusammenwirken, wobei der eine Hebelarm (151) des Handhebels (111) und der Betätigungshebel (81) über eine Lasche (171) gelenkig miteinander verbunden sind.

## Claims

1. An actuating mechanism (1) for Bowden cables (2), particularly Bowden cables of bicycle or motorcycle brakes, comprising a handle (4) movable relatively to a holder (3), the holder (3) having a guide attachment (5) forming a cable guide (6), and the handle (4) consisting of an actuating lever (8) which is articulated on the holder (3) so as to pivot about a pivot axis (12) extending transversely of the cable guide direction and which engages the pull cable (7) of the Bowden cable (2), which extends through the cable guide (6), an independent hand lever (11) forming a handle (10) being mounted on the holder (3) for pivoting about a pivot axis (13) parallel to the pivot axis (12) of the actuating lever (8), for the purpose of pivoting the actuating lever (8), and the hand lever (11) and the actuating lever (8) co-operate as elements of a transmission (16), characterised in that the hand lever (11, 111) is provided with two arms, of which the lever arm (14) remote from the actuating lever (8, 81) forms the handle (10) and of which the lever arm (15, 151) facing the actuating lever (8, 81) forms the transmission element (17).

2. An actuating mechanism according to claim 1, characterised in that the one lever arm (15) of the hand lever (11) and the actuating lever (8) co-operate after the style of a cam transmission (16), the lever arm (15) engaging a cam track (18) of the actuating lever (8) non-positively via a driver (17).

3. An actuating mechanism according to claim 1, characterised in that the hand lever (111) and actuating lever (81) cooperate in the manner of a link quadrilateral (161), one lever arm (151) of the hand lever (111) and the actuating lever (81) being pivotally interconnected via a link (171).

## Revendications

1. Dispositif d'actionnement (1) pour des brins de câbles (2), en particulier des câbles de traction de freins de bicyclette ou de motocyclette, avec une poignée (4), déplacable relativement, par rapport à une fixation (3), la fixation (3) présentant un appendice de guidage (5) constituant un guidage de câble (6) et la poignée (4) étant constituée d'un levier d'actionnement (8), articulé sur la fixation (3) de façon à pouvoir pivoter autour d'un axe de pivotement (12) s'étendant transversalement par rapport à la direction de guidage du câble, le levier d'actionnement agissant sur le câble de traction (7), posé à travers le guidage de câble (6), du brin de câble (2), où, pour faire pivoter le levier d'actionnement (8), un levier à main (11) autonome, constituant une poignée (10), est monté sur la fixation (3), de façon à pouvoir pivoter autour d'un axe de pivotement (13) parallèle à l'axe de pivotement (12) du levier d'actionnement (8), et le levier à main (11) et le levier d'actionnement (8) coopérant à titre d'organes d'une transmission (16), caractérisé en ce que le levier à main (11, 111), est prévu à deux bras, dont le bras de levier (14), opposé au levier d'actionnement (8, 81), constitue la poignée (10) et dont le bras de levier (15, 151), tourné vers le levier d'actionnement (8, 81), constitue l'organe de transmission (17).

2. Dispositif d'actionnement selon la revendication 1, caractérisé en ce que le premier bras de levier (15) du levier à main (11) et le levier d'actionnement (8) coopèrent à la façon d'une transmission à came (16), le bras de levier (15) agissant, par l'intermédiaire d'un organe d'entraînement (17), par une liaison à interaction de forces, sur une piste de came (18) du levier d'actionnement (8).

3. Dispositif d'actionnement selon la revendication 1, caractérisé en ce que le levier à main (111) et le levier d'actionnement (81) coopèrent à la façon d'un quadrilatère articulé (161), le premier bras de levier (151) du levier à main (111) et le levier d'actionnement (81) étant reliés ensemble de façon articulée par l'intermédiaire d'une attache (171).
